# EUROPÄISCHE PATENTSCHRIFT

(11) **EP 1 512 613 B1**
(45) Veröffentlichungstag und Bekanntmachung des Hinweises auf die Patenterteilung: **23.04.2008**
(21) Anmeldenummer: 04013303.5
(22) Anmeldetag: 05.06.2004
(51) Int. Cl.: B62D 25/10, B62D 29/04

(54) **Deckel für ein Kraftfahrzeug**
Cover for a motor vehicle
Couvercle pour un véhicule automobile

(30) Priorität: 06.09.2003 DE 10341166
(43) Veröffentlichungstag der Anmeldung: 09.03.2005
(73) Patentinhaber: Dr.Ing. h.c. F. Porsche Aktiengesellschaft, 70435 Stuttgart (DE)
(72) Erfinder: Armbruster, Reiner, Dipl.-Ing., 75417 Muehlacker (DE); Scholz, Andre, 75446 Wiernsheim (DE)

(56) Entgegenhaltungen:
- EP-A- 0 392 904
- WO-A-99/01314
- DE-A- 2 934 430
- US-A- 2 814 524
- US-A1- 2002 180 103

## Beschreibung

Die Erfindung bezieht sich auf einen Deckel für ein Kraftfahrzeug, der aus Kunststoff hergestellt ist, nach dem Oberbegriff des Patentanspruchs 1.

Es ist bekannt, ein zweisitziges offenes Kraftfahrzeug überwiegend aus Kunststoff herzustellen, US 2,814,524, wobei auch ein Deckel, der einen Bugraum zur Außenseite hin verschließt, ebenfalls aus Kunststoff besteht. Für den in eine Öffnung eines Aufbaus eingesetzten Deckel sind zum Öffnen und Schließen von letzterem Scharniere und ein Schloss vorzusehen, wobei hierfür am Deckel entsprechende Vorkehrungen zu treffen sind. Der Deckel besitzt eine Deckelwand. Einen vergleichbaren Deckel offenbart auch die US 2,973,220, der ebenso aus Kunststoff besteht.

Aus der DE 29 34 430 A1 ist eine Fronthaube eines Kraftfahrzeugs mit einer Sandwichplatte und daran angebrachten Verstärkungsteilen bekannt. Diese Sandwichplatte besteht aus einer oberen Deckschicht, einer unteren Deckschicht und einem zwischen den Deckschichten angeordneten Kern. Die Deckschichten können aus faserverstärktem Kunststoff bestehen. Der Kern kann geschäumt sein oder durch eine sonstige Struktur, z.B. eine Wabenstruktur, gebildet sein.

Es ist Aufgabe der Erfindung, einen Deckel für ein Kraftfahrzeug aus Kunststoff zu schaffen, der bei geringem Gewicht eine hohe Steifigkeit besitzt und mit funktionsgerechten Aufnahmen für Scharniere und ein Schloss versehen ist.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass der Deckel, weil aus kohlefaserverstärktem Kunststoff hergestellt, leichtgewichtig ist und eine vorbildliche Steifigkeit aufweist. Dabei stellen die metallischen Einsätze konstruktiv leicht umsetzbare Aufnahmen für Scharniere und ein Schloss dar, welche Einsätze organisch in den Deckel bzw. zwischen Schichtwänden der Deckelwand integriert sind. Schließlich wird der Deckel noch durch die Längsverstärkungen und die Querverstärkung zusätzlich verstärkt.

In der Zeichnung wird ein Ausführungsbeispiel der Erfindung gezeigt, das nachstehend näher erläutert wird.

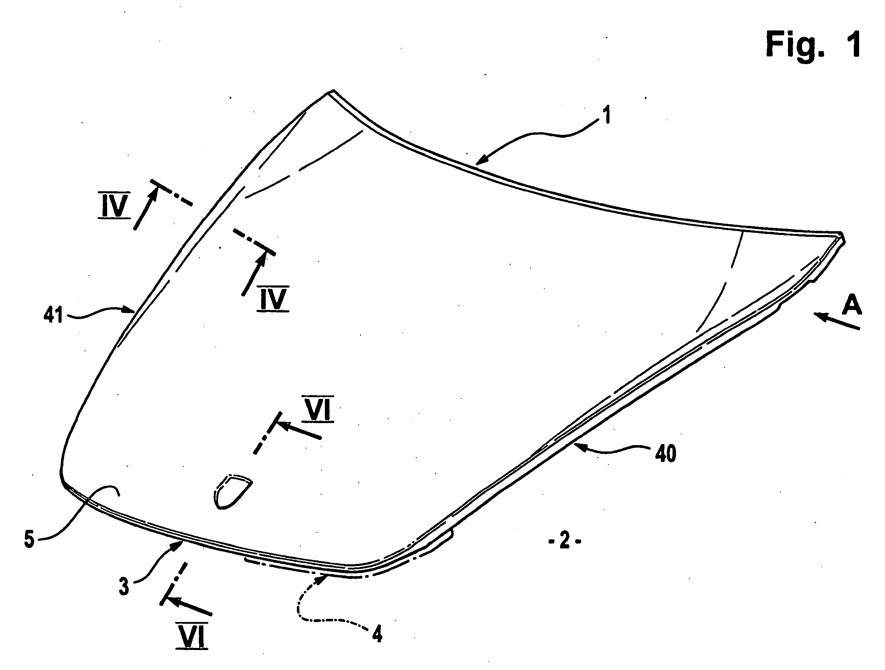

Es zeigen
- Fig. 1: eine Schrägansicht auf einen erfindungsgemäßen Deckel von oben und vorne links,
- Fig. 2: eine Schrägansicht auf den Deckel von unten,
- Fig. 3: eine Ansicht in Pfeilrichtung A der Fig. 1,
- Fig. 4: einen Schnitt nach der Linie IV - IV der Fig. 1,
- Fig. 5: einen Schnitt nach der Linie V - V der Fig. 3,
- Fig. 6: einen Schnitt nach der Linie VI - VI der Fig. 1,
- Fig. 7: einen Schnitt nach der Linie VII - VII der Fig. 6,
- Fig. 8: einen Schnitt nach der Linie VIII - VIII der Fig. 7.

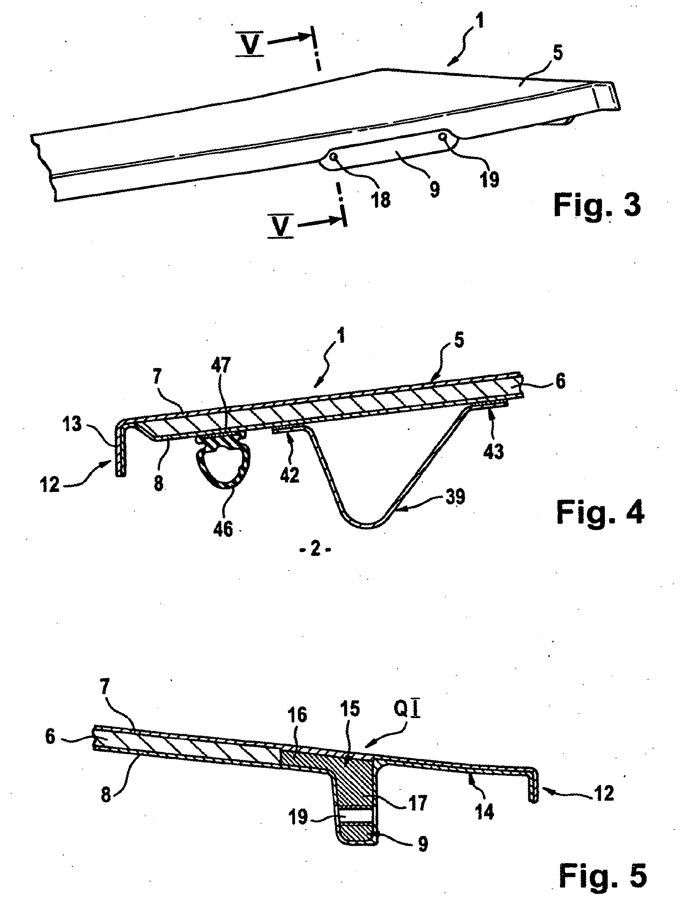

Ein Deckel 1 für ein Kraftfahrzeug der Sportwagengattung - dynamisch anmutendes Styling und ansprechende Motorleistung - verschließt einen Aufnahmeraum 2 in einem Bug 3 des Kraftfahrzeugs, der zur Unterbringung von Gepäckstücken, Aggregaten oder dgl. ausgebildet ist und sich außerhalb eines Fahrgastraums erstreckt. Eine Öffnung 4 eines nicht näher dargestellten Aufbaus begrenzt den Deckel 1, der aus kohlefaserverstärktem Kunststoff - CFK - besteht und eine oberflächenbündig in den Aufbau eingesetzte Deckelwand 5 umfasst. Die Deckelwand 5 des Deckels 1 wird durch einen eine Wabenstruktur aufweisenden Kern 6 gebildet - Fig. 4 -, der mit einer äußeren Schichtwand 7 und einer inneren Schichtwand 8 verbunden ist. Die Schichtwände 7 und 8 umgeben erste und zweite metallische Einsätze 9, 10, 11, die zur Aufnahme von Scharnieren geeignet sind. An äußeren Randzonen 12 des Deckels 1 sind die Schichtwände 7 und 8 an flanschartigen Zusammenführungen 13, 14 beispielsweise durch Kleben miteinander verbunden. Die Zusammenführungen 14 sind als Abwinkelungen ausgeführt.

Der erste Einsatz 9 - ebenso Einsatz 10 - weist in einem ersten Querschnitt QI gesehen, die Form eines Winkels 15 mit einem ersten Schenkel 16 und einem zweiten Schenkel 17 auf. Dabei verlaufen der erste Schenkel 16 in Richtung des von den Schichtwänden 7 und 8 begrenzten Kerns 6 und der zweite Schenkel 17 aufrecht stehend. Im zweiten Schenkel sind Bohrungen 18 und 19 zur Befestigung des zugehörigen Scharniers vorgesehen.

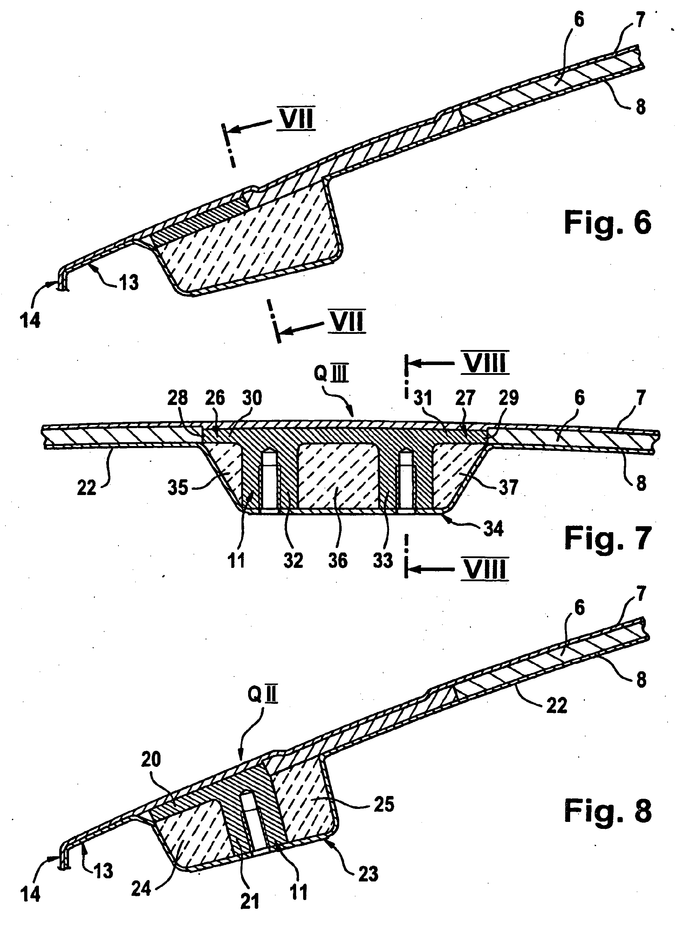

Gemäß Fig. 8 ist in einem zweiten Querschnitt QII der zweite Einsatz 11 in etwa wie der erste Einsatz 9 ausgebildet, denn er besitzt einen ersten Schenkel 20 und einen zweiten Schenkel 21, wobei der erste Schenkel 20 in Richtung des von den Schichtwänden 7 und 8 begrenzten Kerns 6 und der erste zweite Schenkel 21 im Winkel hierzu verlaufen. Darüber hinaus ist die eine Innenseite 22 des Deckels 1 bildende innere Schichtwand 8 im Bereich des zweiten Einsatzes 11 nach Art eines U - förmigen Trägers 23 dargestellt und sind Hohlräume 24 und 25 zwischen Einsatz 11 und Träger mit Schaum ausgefüllt.

In Fig. 7 wird gezeigt, dass in einem dritten Querschnitt QIII gesehen der zweite Einsatz 11 die Form von zwei nebeneinander liegenden und zusammengesetzten T - Stücke 26 und 27 aufweist. Die T - Stücke 26 und 27 sind mit Verlängerungen 28 und 29 des Kerns 6 bildenden, etwa horizontalen Schenkeln 30 und 31 und zwei beabstandeten, aufrechten Schenkeln 32 und 33 versehen. Auch bei diesem Querschnitt QIII ist die innere Schichtwand 8 im Bereich des zweiten Einsatzes 11 nach Art eines U - förmigen Trägers 34 ausgeführt, wobei Hohlräume 35, 36 und 37 zwischen Einsatz 11 und Träger mit Schaum ausgefüllt sind.

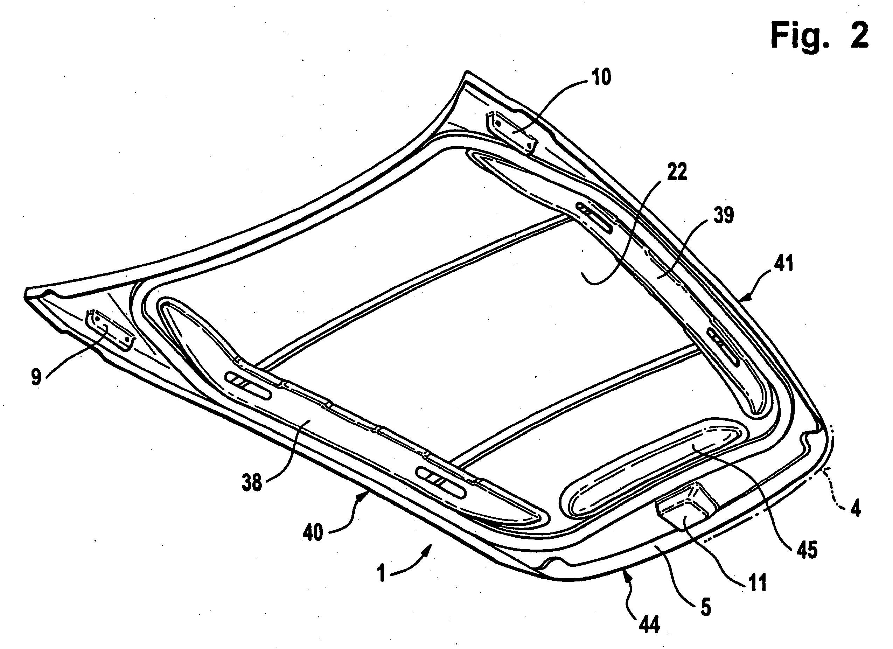

Aus Fig. 2 ist ersichtlich, dass an der Innenseite 22 des Deckels 1 bzw. der Deckelwand 5 trägerartige Längsverstärkungen 38 und 39 vorgesehen sind, die sich benachbart von Längsseiten 40 und 41 erstrecken. Die Längsverstärkungen 38 und 39 weisen im Ausführungsbeispiel einen V - förmigen Querschnitt auf - Fig. 4 -, und sie sind an Flanschen 42 und 43 durch Kleben mit der Deckelwand 5 verbunden. Außerdem ist noch an der Vorderseite 44 des Deckels 1 bzw. der Deckelwand 5 eine gleichfalls trägerartige Querverstärkung 45 angeordnet, die ähnlich wie die Längsverstärkungen 38 und 39 aufgebaut ist; die Längsverstärkungen 38 und 39 sowie die Querverstärkung 45 bestehen aus kohlefaserverstärktem Kunststoff.

Schließlich ist an der Innenseite 22 des Deckels 1 zwischen den Zusammenführungen 13 und 14 und den Längsverstärkungen 38 und 39 bzw. der Querverstärkung 45 ein Dichtkörper 46 angebracht - Fig. 4 -, der zwischen Aufnahmeraum 2 und Deckelwand 5 wirksam ist. Dieser Dichtkörper 46 ist durch eine Klebung 47 mit der Innenseite der Deckelwand 5 verbunden.

## Patentansprüche

1. Deckel für ein Kraftfahrzeug, der aus Kunststoff hergestellt ist, eine Deckelwand umfasst und einen Aufnahmeraum in einem Aufbau eines Kraftfahrzeugs außerhalb eines Fahrgastraums verschließt, wobei die Deckelwand (5) einen Kern (6) begrenzende Schichtwände (7 und 8) aufweist, welche Schichtwände (7 und 8) erste und zweite metallische Einsätze (9, 10 und 11) zur Aufnahme von Scharnieren, einem Schloss oder dgl. umgeben, wobei die Schichtwände (7 und 8) benachbart von äußeren Randzonen (12) des Deckels (1) an Zusammenführungen (13 und 14) miteinander verbunden sind, **dadurch gekennzeichnet, dass** die Deckelwand (5) aus kohlefaserverstärktem Kunststoff besteht, und dass mindestens einer der metallischen Einsätze (9 und 10 bzw. 11) einen ersten Schenkel (16, 20) und einen zweiten Schenkel (17, 21) aufweist, wobei der erste Schenkel (16, 20) in Richtung des von den Schichtwänden (7 und 8) begrenzten Kerns (6) und der zweite Schenkel (17, 21) aufrecht stehend verläuft, und die metallischen Einsätze (9 und 10 bzw. 11) zwischen Schichtwänden (7 und 8) der Deckelwand (5) integriert sind.

2. Deckel nach Anspruch 1, **dadurch gekennzeichnet, dass** der erste Einsatz (9 und 10) für die Scharniere des Deckels in einem ersten Querschnitt (QI) gesehen die Form eines Winkels (15) mit einem ersten Schenkel (16) und einem zweiten Schenkel (17) aufweist, wobei der erste Schenkel (16) in Richtung des von den Schichtwänden (7 und 8) begrenzenden Kerns (6) und der zweite Schenkel (17) aufrecht stehend verläuft.

3. Deckel nach den Ansprüchen 1 und 2, **dadurch gekennzeichnet, dass** der zweite Schenkel (17) mit Bohrungen (18) zur Befestigung des jeweiligen Scharniers versehen ist.

4. Deckel nach Anspruch 1, **dadurch gekennzeichnet, dass** der zweite Einsatz (11) für das Schloss des Deckels (1) in einem zweiten Querschnitt (QII) die Form eines Winkels mit einem ersten Schenkel (20) und einem zweiten Schenkel (21) besitzt, wobei der erste Schenkel (20) in Richtung des von den Schichtwänden (7 und 8) begrenzten Kerns (6) und der zweite Schenkel (21) aufrecht stehend verläuft.

5. Deckel nach Anspruch 4, **dadurch gekennzeichnet, dass** die eine Innenseite (22) des Deckels (1) bildende Schichtwand (8) im Bereich des zweiten Einsatzes (11) nach Art eines U - förmigen Trägers (23) ausgebildet ist, wobei Hohlräume (24 und 25) zwischen Einsatz (11) und Träger (23) ausgefüllt sind.

6. Deckel nach einem oder mehreren der vorangehenden Ansprüche, **dadurch gekennzeichnet, dass** in einem dritten Querschnitt (QIII) gesehen, der zweite Einsatz (11) die Form von zwei nebeneinanderliegender und zusammengesetzter T - Stücke (26 und 27) aufweist, die mit Verlängerungen (28 und 29) des Kerns (6) bildenden etwa horizontalen Schenkeln (30 und 31) und zwei beabstandete aufrechten Schenkeln (32 und 33) versehen sind.

7. Deckel nach Anspruch 6, **dadurch gekennzeichnet, dass** die die Innenseite (22) des Deckels (1) bildende Schichtwand (8) im Bereich des zweiten Einsatzes (11) nach Art eines U - förmigen Trägers (34) ausgebildet ist, wobei Hohlräume (35, 36) zwischen Einsatz (1) und Träger (34) ausgefüllt sind.

8. Deckel nach Anspruch 1, **dadurch gekennzeichnet, dass** an der Innenseite (22) der Deckelwand (5) trägerartige Längsverstärkungen (38, 39) befestigt sind, die sich benachbart von Längsseiten (40 und 41) der Deckelwand (5) erstrecken.

9. Deckel nach Anspruch 1, **dadurch gekennzeichnet, dass** in der Nähe einer Vorderseite (44) der Deckelwand (5) eine trägerartige Querverstärkung (45) vorgesehen ist.

10. Deckel nach den Ansprüchen 8 und 9, **dadurch gekennzeichnet, dass** die Längsverstärkungen (38 und 39) und die Querverstärkung (45) aus kohlefaserverstärktem Kunststoff bestehen.

11. Deckel nach einem oder mehreren der vorangehenden Ansprüche, **dadurch gekennzeichnet, dass** an der Innenseite (22) des Deckels (1) zwischen den Zusammenführungen (13 und 14) und den Längsverstärkungen (38 und 39) bzw. der Querverstärkung (45) ein Dichtkörper (46) vorgesehen ist.

12. Deckel nach Anspruch 10, **dadurch gekennzeichnet, dass** der Dichtkörper (46) durch einen Klebung (47) mit der Innenseite (22) des Deckels (1) verbunden ist.

## Claims

1. Cover for a motor vehicle, which is produced from plastic, comprises a cover wall and closes a receiving space in a motor vehicle body outside a passenger compartment, the cover wall (5) having laminated walls (7 and 8) bounding a core (6), which laminated walls (7 and 8) surround first and second metallic inserts (9, 10 and 11) for receiving hinges, a lock or the like, the laminated walls (7 and 8) being connected to each other adjacent to outer edge zones (12) of the cover (1) at combining junctions (13 and 14), **characterized in that** the cover wall (5) is composed of a carbon-fibre-reinforced plastic, and **in that** at least one of the metallic inserts (9 and 10 or 11) has a first limb (16, 20) and a second limb (17, 21), the first limb (16, 20) running in the direction of the core (6) bounded by the laminated walls (7 and 8), and the second limb (17, 21) running upright, and the metallic inserts (9 and 10 or 11) being integrated between laminated walls (7 and 8) of the cover wall (5).

2. Cover according to Claim 1, **characterized in that** the first insert (9 and 10) for the hinges of the cover has, as seen in a first cross section (QI), the shape of an elbow (15) with a first limb (16) and a second limb (17), the first limb (16) running in the direction of the core (6) bounded by the laminated walls (7 and 8), and the second limb (17) running upright.

3. Cover according to Claims 1 and 2, **characterized in that** the second limb (17) is provided with bores (18) for the fastening of the particular hinge.

4. Cover according to Claim 1, **characterized in that** the second insert (11) for the lock of the cover (1) has, in a second cross section (QII), the shape of an elbow with a first limb (20) and a second limb (21), the first limb (20) running in the direction of the core (6) bounded by the laminated walls (7 and 8), and the second limb (21) running upright.

5. Cover according to Claim 4, **characterized in that** the laminated wall (8) which forms an inside (22) of the cover (1) is designed in the region of the second insert (11) in the manner of a U-shaped support (23), with cavities (24 and 25) between insert (11) and support (23) being filled.

6. Cover according to one or more of the preceding claims, **characterized in that** the second insert (11) has, as seen in a third cross section (QIII), the form of two T-pieces (26 and 27) which are situated next to each other and are placed together and are provided with approximately horizontal limbs (30 and 31) forming extensions (28 and 29) of the core (6) and with two spaced-apart, upright limbs (32 and 33).

7. Cover according to Claim 6, **characterized in that** the laminated wall (8) forming the inside (22) of the cover (1) is designed in the region of the second insert (11) in the manner of a U-shaped support (34), with cavities (35, 36) between insert (1) and support (34) being filled.

8. Cover according to Claim 1, **characterized in that** support-like longitudinal reinforcements (38, 39) which extend adjacent to longitudinal sides (40 and 41) of the cover wall (5) are fastened to the inside (22) of the cover wall (5).

9. Cover according to Claim 1, **characterized in that** a support-like transverse reinforcement (45) is provided in the vicinity of a front side (44) of the cover wall (5).

10. Cover according to Claims 8 and 9, **characterized in that** the longitudinal reinforcements (38 and 39) and the transverse reinforcement (45) are composed of carbon-fibre-reinforced plastic.

11. Cover according to one or more of the preceding claims, **characterized in that** a sealing body (46) is provided on the inside (22) of the cover (1) between the combining junctions (13 and 14) and the longitudinal reinforcements (38 and 39) or the transverse reinforcement (45).

12. Cover according to Claim 10, **characterized in that** the sealing body (46) is connected to the inside (22) of the cover (1) by an adhesive bond (47).

## Revendications

1. Couvercle pour un véhicule automobile, lequel couvercle est fabriqué en matière synthétique, comporte une paroi de couvercle et ferme un compartiment intérieur dans une ossature d'un véhicule automobile, situé à l'extérieur d'un habitacle, la paroi de couvercle (5) présentant des parois de recouvrement (7 et 8) délimitant un noyau (6), lesquelles parois de recouvrement (7 et 8) renferment des premier et deuxième inserts métalliques (9, 10 et 11) destinés à recevoir des charnières, une serrure ou un autre élément similaire, les parois de recouvrement (7 et 8) étant reliées entre elles à des jonctions (13 et 14) contiguës à des zones de bords extérieurs (12) du couvercle (1), **caractérisé en ce que** la paroi de couvercle (5) est en matière synthétique renforcée par des fibres de carbone et **en ce qu'**au moins un des inserts métalliques (9 et 10 ou selon le cas 11) présente une première aile (16, 20) et une seconde aile (17, 21), la première aile (16, 20) s'étendant en direction du noyau (6) délimité par les parois de recouvrement (7 et 8) et la seconde aile (17, 21) s'étendant verticalement et les inserts métalliques (9 et 10 ou selon le cas 11) étant intégrés entre les parois de recouvrement (7 et 8) de la paroi de couvercle (5).

2. Couvercle selon la revendication 1, **caractérisé en ce que** le premier insert (9 et 10) destiné aux charnières du couvercle présente, vu suivant une première coupe transversale (QI), la forme d'une équerre (15) comportant une première aile (16) et une seconde aile (17), la première aile (16) s'étendant en direction du noyau (6) délimité par les parois de recouvrement (7 et 8) et la seconde aile (17) s'étendant verticalement.

3. Couvercle selon les revendications 1 et 2, **caractérisé en ce que** la seconde aile (17) est pourvue de trous alésés (18) destinés à la fixation de la charnière correspondante.

4. Couvercle selon la revendication 1, **caractérisé en ce que** le deuxième insert (11) destiné à la serrure du couvercle (1) possède, vu suivant une deuxième coupe transversale (QII), la forme d'une équerre comportant une première aile (20) et une seconde aile (21), la première aile (20) s'étendant en direction du noyau (6) délimité par les parois de recouvrement (7 et 8) et la seconde aile (21) s'étendant verticalement.

5. Couvercle selon la revendication 4, **caractérisé en ce que** la paroi de recouvrement (8) formant un côté intérieur (22) du couvercle (1) est conformée dans la zone du deuxième insert (11) à la manière d'un support en U (23), des cavités (24 et 25) entre l'insert (11) et le support (23) étant remplies.

6. Couvercle selon l'une ou, plusieurs des revendications précédentes, **caractérisé en ce que** le deuxième insert présente, vu suivant une troisième coupe transversale (QIII), la forme de deux pièces en T (26 et 27) disposées l'une à côté de l'autre et reliées entre elles, lesquelles sont pourvues d'ailes (30 et 31) à peu près horizontales formant des prolongements (28 et 29) du noyau (6) et de deux ailes (32 et 33) verticales distantes l'une de l'autre.

7. Couvercle selon la revendication 6, **caractérisé en ce que** la paroi de recouvrement (8) formant le côté intérieur (22) du couvercle (1) est conformée dans la zone du deuxième insert (11) à la manière d'un support en U (34), des cavités (35 et 36) entre l'insert (11) et le support (34) étant remplies.

8. Couvercle selon la revendication 1, **caractérisé en ce que** des renforts longitudinaux porteurs (38, 39), lesquels s'étendent de façon contiguë à des côtés longitudinaux (40 et 41) de la paroi de couvercle (5), sont fixés du côté intérieur (22) de la paroi de couvercle (5).

9. Couvercle selon la revendication 1, **caractérisé en ce qu'**un renfort transversal porteur (45) est prévu à proximité d'un côté avant (44) de la paroi de couvercle (5).

10. Couvercle selon les revendications 8 et 9, **caractérisé en ce que** les renforts longitudinaux (38 et 39) et le renfort transversal (45) sont en matière synthétique renforcée par des fibres de carbone.

11. Couvercle selon l'une ou plusieurs des revendications précédentes, **caractérisé en ce qu'**un corps d'étanchéité (46) est prévu du côté intérieur (22) du couvercle (1), entre les jonctions (13 et 14) et les renforts longitudinaux (38 et 39) ou selon le cas le renfort transversal (45).

12. Couvercle selon la revendication 10, **caractérisé en ce que** le corps d'étanchéité (46) est relié par un collage (47) au côté intérieur (22) du couvercle (1).
